# EUROPÄISCHE PATENTSCHRIFT

(11) **EP 2 604 838 B1**
(45) Veröffentlichungstag und Bekanntmachung des Hinweises auf die Patenterteilung: **20.11.2013**
(21) Anmeldenummer: 11400058.1
(22) Anmeldetag: 16.12.2011
(51) Int. Cl.: F02K 9/42, F02K 9/95

(54) **Zweistoff-Triebwerk**
Dual fuel engine
Moteur à deux carburants

(43) Veröffentlichungstag der Anmeldung: 19.06.2013
(73) Patentinhaber: Astrium GmbH, 82024 Taufkirchen (DE)
(72) Erfinder: Schwarting, Walter, 26127 Oldenburg (DE)
(74) Vertreter: Hansmann, Dierk

(56) Entgegenhaltungen:
- FR-A1- 2 827 641
- US-A1- 2008 264 372
- OLAF DEUTSCHMANN ET AL: "Interaction of transport and chemical kinetics in catalytic combustion of H2/O2 mixtures on Pt", PROCEEDINGS 8TH INTERNATIONAL SYMPOSIUM ON TRANSPORT PHENOMENA IN COMBUSTION, 1. Januar 1995 (1995-01-01), Seiten 166-175, XP55027611, San Francisco

## Beschreibung

Die Erfindung betrifft ein Zweistoff-Triebwerk gemäß Anspruch 1 auf der Basis kryogener Flüssiggase, insbesondere Lageregelungs-Triebwerk, mit einer Zündvorrichtung, die aus einer Katalysatoreinheit in Form einer elektrisch beheizbaren Kartusche oder Pille aus einem keramischen oder metallenen Material besteht, wobei die Katalysatoreinheit in einer von der Haupt-Brennkammer des Triebwerks getrennt liegenden Nebenkammer angeordnet ist und wobei Platin als Katalysator dient.

Bei Lageregelungs-Triebwerken, die in kurzzeitigen Intervallen, d.h. im sogenannten Pulse-Mode, betrieben werden, besteht eine besondere Anforderung darin, beim Zünden eine hohe Spontaneität zu erreichen. Mit Flüssigkeit beaufschlagte Zweistoff-Triebwerke haben dabei den Vorteil einer selbsttätigen Zündung, eine Eigenschaft der sogenannten hypergolen Brennstoff-Oxidator-Mischungen. Auch die weiterhin bekannten Monopropellant-Triebwerke auf der Basis von wasserfreiem Hydrazin besitzen den Vorteil einer hohen Spontaneität des Zündens der Hydrazin-Zersetzungsreaktion beim Kontakt des Hydrazins mit Edelmetall-Katalysatoren. Das Gleiche gilt auch für "grüne", d.h. sogenannte umweltverträgliche Monopropellant-Treibstoffe, die als "High Performance Green Propellants" (HPGP) bekannt geworden sind.

Zweistoff-Triebwerke auf der Basis kryogener Flüssiggase, z.B. Flüssigwasserstoff (LH2) und Flüssigsauerstoff (LOX), zünden dagegen nicht "hypergol", sondern erfordern eine Zündvorrichtung, die auch unter tiefkalten Bedingungen funktioniert. Bei derartigen Triebwerken sind, ausgehend vom Lagerungszustand der tiefkalten flüssigen Gase (LH2 = liquid hydrogen und LOX = liquid oxygen), die nachfolgend aufgeführten Schritte erforderlich, um ein zündfähiges Gasgemisch zu erzielen:
- Förderung der kryogenen Flüssiggase mit Druckerhöhung,
- Anhebung des thermodynamischen Zustandes auf einen "trockenen" Dampfzustand,
- Gemisch-Regelung eines konstanten, quasistöchiometrischen Massenstromes beider Gase trotz schwankender Gasdichten,
- zuverlässige und spontane Zündung des unter Umständen tiefkalten Brenngas-Gemisches auch im Intervall-Betrieb (Pulse-Mode).

Durch eine hohe Zündgeschwindigkeit soll verhindert werden, daß Gasgemisch-Mengen unverbrannt freigesetzt werden und daß es im Fall einer verzögerten Zündung zu einer Explosion großer, bereits freigesetzter H₂/O₂-Gasmischungs-Volumina kommt. Grundsätzlich müssen solche Mischungen von Wasserstoff und Sauerstoff, d.h. Knallgasansammlungen, die sich außerhalb der Brennkammer befinden, unbedingt vermieden werden, da ansonsten Beschädigungen sowohl des Triebwerks als auch von Komponenten in seiner Umgebung nicht zu vermeiden sind.

Aus der US 2003/019977 A1 ist ein Zweistoff-Triebwerk der eingangs genannten Art bekannt geworden ist, bei dem ein zweistufiges Zündsystem vorgesehen ist. Die Zündvorrichtung besteht bei diesem bekannten Triebwerk aus einer Katalysatoreinheit in Form einer elektrisch beheizten Kartusche aus einem metallenen Material, wobei die Katalysatoreinheit in einer von der Haupt-Brennkammer des Triebwerks getrennt liegenden Nebenkammer angeordnet ist. Es wird bei dieser bekannten Anordnung zunächst eine kleine, permanent stehende Zünd-Fackel gezündet, die dann ihrerseits in einer zuschaltbaren zweiten Stufe den Hauptstrom der Treibstoff-Mischung zündet. Die erste Phase wird gezündet, indem ein Katalysatorbett mit einer metallenen Platin-Rhodium-Legierung in Form einer Hülse oder einer gewundenen Drahtspirale oder aber in Siebform erhitzt und anschließend als "heißer" Katalysator aktiviert wird.

Aufgabe der Erfindung ist es, ein Triebwerk der eingangs genannten Art so auszubilden, daß auch für tiefkalte Brenngas-Mischungen ein Zündprozeß mit hoher Zuverlässigkeit und Spontaneität gewährleist ist.

Die Erfindung löst diese Aufgabe dadurch, daß bei einem derartigen Triebwerk vorgesehen ist, daß die Katalysatoreinheit mit einer katalytisch hochaktiven Oberflächenbeschichtung aus fein verteiltem polykristallinen Platin mit einer sehr hohen spezifischen Oberfläche versehen ist.

Die Erfindung geht dabei von der Tatsache aus, daß bei der Verwendung von Dämpfen tiefkalter Flüssiggase auch nach einer Erhöhung der inneren Energie und des Dampfdrucks der Gase durch Wärmezufuhr die in ein derartiges Triebwerk eingelassene Gasmischung zwar immer noch sehr kalt, aber trocken ist, d.h. frei von Kondensat. Da sich niedrige Temperaturen unmittelbar auf das katalytisch aktivierte Zündverhalten eines Brenngases auswirken, muß, um eine hohe Spontaneität des Zündvorgangs zu erhalten, an der Katalysatoroberfläche eine Mindest-Temperatur eingehalten werden, was eine permanente Temperaturregelung für die Katalysatoroberfläche erforderlich macht. Dadurch, daß bei dem Triebwerk nach der Erfindung die Katalysatoreinheit, die vom primären Brenngasstrom getrennt in einer seitlich zur Haupt-Brennkammer liegenden Nebenkammer angeordnet ist, werden diese Anforderungen erfüllt.

Durch die erfindungsgemäße Ausbildung der Katalysatoreinheit kann für Mischungen von Wasserstoff und Sauerstoff eine extrem hohe Zündgeschwindigkeit erzielt werden. Das Platin stellt dabei ein sehr effektives Katalysatormaterial dar, insbesondere dadurch, daß es in Form von fein verteiltem polykristallinem Platin mit einer sehr hohen spezifischen Oberfläche verwendet wird, das, da von schwarzer Farbe, auch als Platin-Mohr bezeichnet wird und das in dieser Form auf die Oberfläche der Katalysatoreinheit aufgetragen wird.

Die Reaktivität bzw. Reaktionsgeschwindigkeit des katalytischen Prozesses hängt dabei von der Oberflächentemperatur des Katalysators ab. Während im Bereich der Raumtemperatur die Verbrennungs-Reaktion von Wasserstoff mit Luft oder reinem Sauerstoff spontan zündet, erfolgt bei tieferen Temperaturen die Zündung zunehmend verzögert, bis am Ende gar keine Zündung mehr erfolgt, da die beim katalytischen Reaktionsprozeß erzeugte Wärme in die Umgebung abfließt und nicht ausreicht, die lokale Temperatur des Gases und der Katalysatoroberfläche hinreichend weit zu steigern. Der katalytische Zündvorgang von Wasserstoff mit Luft oder mit reinem Sauerstoff ist dabei im Prinzip bereits vom sogenannten Döbereiner Feuerzeug bekannt, nicht jedoch der Temperatureffekt.

Erfindungsgemäß ist die Katalysatoreinheit vom primären Brenngasstrom getrennt in einer seitlich zur Haupt-Brennkammer liegenden Nebenkammer angeordnet. Durch diese Anordnung der Katalysatoreinheit wird verhindert, daß durch den sehr kalten Gasstrom die Oberflächentemperatur der Katalysatoreinheit aufgrund ihrer nur geringen Wärmekapazität so stark abgesenkt wird, daß sie nicht mehr die erforderliche Zündenergie bereitstellen kann und ihre Zündfähigkeit somit zumindest erheblich eingeschränkt würde. Da erfindungsgemäß die Katalysatoreinheit jedoch in einer von der Haupt-Brennkammer getrennt liegenden Nebenkammer angeordnet ist, gelangt ein weniger starker Kaltgasstrom zur Zündung an die Katalysator-Oberfläche und es erfolgt bereits im ersten Moment des Gaskontaktes aus dieser Nebenkammer heraus spontan die Zündung mit einer anschließenden Rückzündung in den Brenngasstrom der Haupt-Brennkammer. Zusätzlich ist bei dem Triebwerk nach der Erfindung die Katalysatoreinheit zum Zweck der thermischen Entkopplung von der umgebenden, üblicherweise tiefkalten, Triebwerks-Masse isoliert angeordnet, wodurch der Bedarf an elektrischer Heizleistung weiter reduziert wird. Sobald sich das Triebwerk nach der Erfindung im Betrieb ausreichend erwärmt hat, kann auf eine elektrische Erwärmung der Katalysatoreinheit verzichtet werden.

In vorteilhafter weiterer Ausgestaltung der Erfindung ist die Katalysatoreinheit mit redundanten Heizwendeln ausgestattet, ferner kann aus Redundanzgründen und zur Erzielung einer parallelen Zündmöglichkeit eine mehrfache Anordnung derartiger Katalysatoreinheiten vorgesehen werden.

Eine weitere Möglichkeit der Zündung des Hauptgasstromes ist in vorteilhafter Weiterbildung der Erfindung dadurch gegeben, daß aus der Zündkammer heraus eine Zündfackel erzeugt wird. Diese Zündfackel wird mit einem Gemisch der separat eingelassenen Gase, d.h. dem Brenngas (GH2) und dem Oxidator (GOX), betrieben. Die Zündung erfolgt an der heißen Oberfläche der Katalysatoreinheit, anschließend wird die Zündfackel permanent während des gesamten Zeitraumes einer Lageregelungs-Aktion aufrecht erhalten und stellt eine hohe Zündenergie bereit. In vorteilhafter Weiterbildung der Erfindung kann diese Zündfackel-Anordnung ferner redundant und für einen Parallelbetrieb mehrfach vorgesehen sein.

Die Vorteile der Erfindung bestehen in einer spontanen Zündung tiefkalter H₂/O₂-Gasgemische, in ihrer Redundanz, in der Möglichkeit einer Mehrfach-Zündung und darin, daß es zu keiner Zündverzögerung oder zu Zündaussetzern kommen kann, da eine Abkühlung der Katalysatoreinheit von vornherein ausgeschlossen ist. Zudem reduziert sich der Bedarf an elektrischer Energie auf den geregelten Erhalt der Mindest-Oberflächentemperatur, bei heißem Triebwerk besteht zudem kein Bedarf an elektrischer Energie.

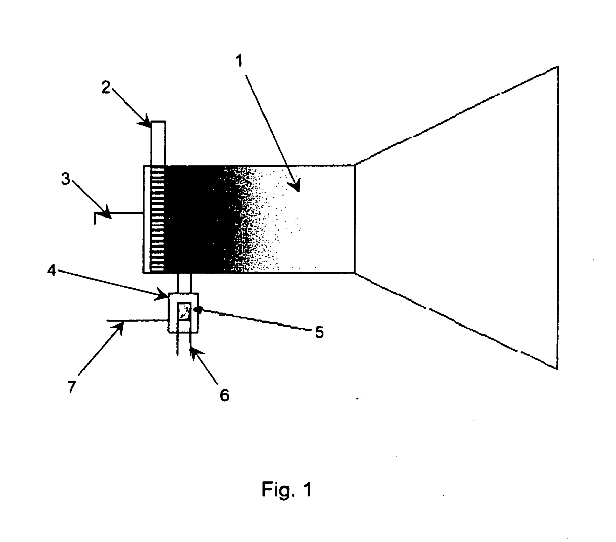

Nachfolgend soll das Triebwerk gemäß der Erfindung anhand eines in der Zeichnung dargestellten Ausführungsbeispiels näher erläutert werden. Die Figur zeigt in schematischer Darstellung den Aufbau eines Triebwerks mit katalytischer Zündvorrichtung.

Das in der Figur dargestellte Zweistoff-Lageregelungstriebwerk auf der Basis kryogener Flüssiggase mit einer Haupt-Brennkammer 1 ist mit Einlässen für die Brenngase, d.h. je einem Einlaß 2 für den flüssigen Brennstoff, in diesem Fall gasförmigem Wasserstoff (GH2), und einem Einlaß 3 für den Oxidator, in diesem Fall gasförmigem Sauerstoff (GOX), ausgestattet. In einer Nebenkammer 4 ist eine Katalysatoreinheit in Form einer Kartusche 5 angeordnet, die über einen elektrischen Heizanschluß 6 verfügt. Ferner ist im Fall des hier beschriebenen Ausführungsbeispiels in der Nebenkammer 4 ein zusätzlicher Einlaß 7 für eine separate Versorgung der Katalysatoreinheit 5 mit Brenngasen vorgesehen.

Die katalytisch aktivierte Spontan-Zündung eines Brenngases, das aus einer zündfähigen Gas-Mischung von z.B. und Sauerstoff (GOX) besteht, erfordert eine Mindesttemperatur bezogen auf den Kontaktbereich des Brenngas-Gemisches mit der Katalysator-Oberfläche. In dieser Zone treffen das kalte Gasgemisch mit seiner Wärmekapazität und die Oberfläche der Katalysatoreinheit 5 mit deren Wärmekapazität aufeinander und es entsteht in der Grenzschicht eine mittlere Temperatur, die einen Mindestwert nicht unterschreiten darf, um eine Mindest-Reaktionsgeschwindigkeit einzuhalten. Nach erfolgter Zündung des Brenngas-Gemisches wird durch die Reaktionsenthalpie der Verbrennungsreaktion eine hohe Energie freigesetzt, die als Zünd-Fackel brennend den Zündvorgang des Haupt-Brenngasstromes aufrecht erhält.

## Patentansprüche

1. Zweistoff-Triebwerk auf der Basis kryogener Flüssiggase, insbesondere Lageregelungs-Triebwerk, mit einer Zündvorrichtung, die aus einer Katalysatoreinheit in Form einer elektrisch beheizbaren Kartusche oder Pille aus einem keramischen oder metallenen Material besteht, wobei die Katalysatoreinheit in einer von der Haupt-Brennkammer des Triebwerks getrennt liegenden Nebenkammer angeordnet ist und wobei Platin als Katalysator dient, **dadurch gekennzeichnet, daß** die Katalysatoreinheit mit einer katalytisch hochaktiven Oberflächenbeschichtung aus fein verteiltem polykristallinen Platin mit einer sehr hohen spezifischen Oberfläche versehen ist.

2. Triebwerk nach Anspruch 1, **dadurch gekennzeichnet, daß** die Katalysatoreinheit (5) mit redundanten Heizwendeln ausgestattet ist.

3. Triebwerk nach Anspruch 1 oder 2, **dadurch gekennzeichnet, daß** eine mehrfache Anordnung von Katalysatoreinheiten (5) vorgesehen ist.

## Claims

1. Dual-substance propulsion unit based on cryogenic liquid gases, in particular a position-controlling propulsion unit, having an igniting device which consists of a catalyser unit in the form of an electrically heatable cartridge or pellet made of a ceramic or metallic material, wherein the catalyser unit is arranged in a subsidiary chamber which is located separately from the main combustion chamber of the propulsion unit, and wherein platinum is used as the catalyser, **characterised in that** the catalyser unit is provided with a catalytically highly active surface coating made of finely divided polycrystalline platinum with a very high specific surface area.

2. Propulsion unit according to Claim 1, **characterised in that** the catalyser unit (5) is equipped with redundant heating coils.

3. Propulsion unit according to Claim 1 or 2, **characterised in that** a multiple arrangement of catalyser units (5) is provided.

## Revendications

1. Moteur fusée à deux carburants à base de gaz liquides cryogènes, en particulier organe propulseur de régulation de position, qui est doté d'un dispositif d'allumage composé d'une unité de catalyseur en forme de cartouche ou d'une pile à chauffage électrique en matière céramique ou métallique, sachant que l'unité de catalyseur est disposée dans une chambre secondaire, qui est séparée de la chambre de combustion principale du moteur fusée, et sachant que du platine est utilisé comme catalyseur, **caractérisé en ce que** l'unité de catalyseur est pourvue d'un revêtement de surface fortement actif au niveau catalytique, qui consiste en platine polycristallin à surface fortement spécifique, finement réparti.

2. Moteur fusée selon la revendication 1, **caractérisé en ce que** l'unité de catalyseur (5) est dotée de spirales de filament de chauffage redondantes.

3. Moteur fusée selon revendication 1 ou 2, **caractérisé en ce qu'**est prévu un agencement multiple d'unités de catalyseur (5).
